# EUROPÄISCHE PATENTSCHRIFT

(11) **EP 1 181 143 B1**
(45) Veröffentlichungstag und Bekanntmachung des Hinweises auf die Patenterteilung: **02.07.2003**
(21) Anmeldenummer: 00927043.0
(22) Anmeldetag: 26.04.2000
(51) Int. Cl.: B29C 45/00

(54) **VERFAHREN ZUM HERSTELLEN VON KUNSTSTOFFTEILEN MIT AUFGEPRÄGTER STRUKTUR UND VORRICHTUNG ZUR DURCHFÜHRUNG DES VERFAHRENS**
METHOD FOR PRODUCING PLASTIC PARTS HAVING AN IMPRESSED STRUCTURE, AND A DEVICE FOR CARRYING OUT SAID METHOD
PROCEDE DE PRODUCTION DE PIECES DE PLASTIQUES PRESENTANT UNE STRUCTURE EN RELIEF, ET DISPOSITIF PERMETTANT DE METTRE EN OEUVRE CE PROCEDE

(30) Priorität: 07.05.1999 DE 19920941
(43) Veröffentlichungstag der Anmeldung: 27.02.2002
(73) Patentinhaber: Krauss-Maffei Kunststofftechnik GmbH, 80997 München (DE)
(72) Erfinder: ILS, Peter, D-80637 München (DE); LICHTINGER, Peter, D-82256 Fürstenfeldbruck (DE); PRAUTZSCH, Günter, D-50674 Köln (DE); GÜNZEL, Timo, D-85221 Dachau (DE); PFISTER, Wilhelm, D-91220 Schnaittach (DE); SCHREYER, Jürgen, D-91207 Lauf (DE); HACKERT, Jürgen, D-08223 Grünbach (DE)
(74) Vertreter: Zollner, Richard
(86) Internationale Anmeldenummer: EP0003702
(87) Internationale Veröffentlichungsnummer: WO00067982

(56) Entgegenhaltungen:
- EP-A- 0 495 219
- DE-A- 4 318 574
- PATENT ABSTRACTS OF JAPAN vol. 9, no. 42 (M-359), 22. Februar 1985 (1985-02-22) & JP 59 182781 A (TOPPAN PRINTING CO LTD), 17. Oktober 1984 (1984-10-17)

## Beschreibung

Die Erfindung betrifft ein Verfahren und eine Vorrichtung zur Herstellung von Kunststoffteilen mit einer aufgeprägten Struktur. Bevorzugtes Anwendungsgebiet der vorliegenden Erfindung ist Herstellung von räumlich spritzgegossenen Schaltungsträgern (3-D Molded Interconnect Devices, 3-D MID) durch Heißprägen einer Leiterbahnstruktur von einer Folie auf ein spritzgegossenes Substrat. MID's sind Formteile mit integrierter Leiterbildstruktur. Sie schaffen enorme technische und Rationalisierungspotentiale und sind wesentlich umweltverträglicher als herkömmliche Leiterplatten. Mit MID's können elektrische und mechanische Elemente auf nahezu beliebig geformten Leiterplatten integriert werden. Sie ermöglichen völlig neue Funktionen und helfen bei der Miniaturisierung von Produkten. Durch die Einsparung mechanischer Bauteile wird die Montage vereinfacht und die Zuverlässigkeit erhöht.

Bisher werden Kunststoffteile mit heiß aufgeprägter Struktur wie die zuvor genannten 3-D MID's in mehreren voneinander getrennten Stufen hergestellt (siehe zum Beispiel DE 197 32 353 A1). Zunächst werden Kunststoffteile in bekannter Weise auf herkömmlichen Spritzgießmaschinen hergestellt. Die spritzgegossenen Kunststoffteile werden anschließend oder zu einem späteren Zeitpunkt einer Prägepresse zugeführt, in der die Struktur von einer Folie auf die Kunststoffteile heiß aufgeprägt wird. Für einen sauberen Prägevorgang müssen die kunststoffteile fettfrei und sauber sein sowie je nach Kunststoffmaterial auf eine unterschiedliche Temperatur vorgewärmt sein. Werden die Kunststoffteile zwischengelagert, ist es somit erforderlich, diese vor dem Prägen vorzuwärmen, zu reinigen und gegebenenfalls zu entfetten. Außerdem ist beim Einlegen der Kunststoffteile in die Prägepresse auf eine genaue Positionierung der Teile zu achten. Da das Einlegen bisher ausschließlich manuell erfolgt, liegt hierin eine zusätzliche Fehlerquelle bei der Herstellung der MID's.

Aus der EP 0 671 251 A1 ist es bekannt, in einer Spritzgießmaschine mehrere Bearbeitungsstationen vorzusehen, insbesondere bei einem Mehrmaterialien-Spritzguß, und dabei die reinen Spritzschritte und die sonstigen Bearbeitungsschritte wie Kühlen, Ausstoßen, Besprühen und Deformieren der Spritzlinge in jeweils eigenen Stationen auszuführen, den Herstellungsprozess also in möglichst viele kleine Einheiten aufzusplitten, um die Taktzeit verkürzen zu können. Dies erfordert allerdings einen vergleichsweise großen maschinentechnischen Aufwand.

In der DE 195 04 332 A1 ist die gleichzeitige Herstellung und Montage von Einzelteilen im Spritzguss beschrieben. In den Spritznestem werden Kunststoffteile erzeugt, wobei bei jedem Spritzvorgang in den jeweiligen Spritznestem gleichzeitig mehrere verschiedene Spritzlinge erzeugt und in den Montagenestem die einzelnen Spritzlinge zu einem fertigen Kunststoffteil zusammengebaut werden. Mit dem Schließen des Werkzeugs werden sowohl die Spritznester als auch die Montagenester geschlossen und bleiben für die Dauer des Spritzvorgangs geschlossen. Während dieser Zeit sind die Montagenester nicht zugänglich. Die Zufuhr von Folienmaterial und die Übertragung von Strukturen aus der Folie auf die Spritzlinge ist mit der dort beschriebenen Vorrichtung nicht möglich.

Das Dokument JP 59 182781 A offenbart ein Verfahren zum Herstellen von Kunststoffteilen mit einem Farbauftrag, wobei mit einer Spritzgießmaschine zunächst das Kunststoffteil hergestellt wird und dieses anschließend mittels eines Drehtisches zu einer Druckstation transferiert wird. Der Farbauftrag ist zwar von dem Spritzschritt entkoppelt und wird separat zum Schließvorgang der Schließeinheit der Spritzgießmaschine ausgeführt, aber der Farbauftrag selbst erfolgt nicht innerhalb der Schließeinheit der Spritzgießmaschine, sondern völlig ausserhalb derselben.

Die gattungsbildende DE 43 18 574 A offenbart ein Verfahren und eine Vorrichtung zum Herstellen laminierter Formteile. Gemäß Figur 3 dieses Dokuments bilden eine feste Werkzeugaufspannplatte und eine bewegliche Werkzeugaufspannplatte eine Schließeinheit einer Spritzgießmaschine. Innerhalb dieser übergeordneten Schließeinheit der Spritzgießmaschine sind weitere separat voneinander betriebene Schließeinheiten für ein Spritzgießwerkzeug einerseits und für ein Presswerkzeug andererseits vorgesehen, nämlich einerseits die Schließplatte des Spritzgießwerkzeug und andererseits die Schließplatte des Presswerkzeugs, die sich separat und unabhängig voneinander bewegen lassen und zwar zusätzlich zu der Schließbewegung der übergeordneten Schließeinheit der Spritzgießmaschine. Bei dieser Vorrichtung werden das Spritzgießwerkzeug und das Presswerkzeug mittels der ihnen zugeordneten und separat betriebenen Schließplatten voneinander entkoppelt betrieben. Der Pressvorgang ist von dem Spritzschritt entkoppelt und wird separat zu dem mit der Schließplatte des Spritzgießwerkzeugs auszuführenden Schließvorgang desselben ausgeführt. Die in den Figuren 1, 2 und 9 dieses Dokuments dargestellten Spritzgießmaschinen und das auf diesen betriebene Verfahren bilden den nächstkommenden Stand der Technik. Diese Figuren zeigen eine Spritzgießmaschine mit einer Schließeinheit, in der ein Spritzgießwerkzeug und ein Presswerkzeug integriert sind. Beide Werkzeuge werden beim Betrieb der Schließeinheit gleichzeitig geöffnet und geschlossen. Das Spritzgießen und das Pressen können daher nicht wie bei der Ausführungsform gemäß Figur 3 der DE 43 41 574 A auf ihre spezifischen Zykluszeiten ausgerichtet werden, sondern es muss stets ein Kompromiss gefunden werden.

Der Erfindung liegt die Aufgabe zugrunde, ein Verfahren und eine Vorrichtung anzugeben, um Kunststoffteile mit einer aufgeprägten Struktur sauber, schnell und präzise sowie mit möglichst wenig Ausschuss herstellen zu können.

Die Lösung dieser Aufgabe erfolgt durch ein Verfahren mit den Merkmalen von Patentanspruch 1 sowie mit einer Vorrichtung mit den Merkmalen von Patentanspruch 9. Vorteilhafte Ausgestaltungen und Weiterentwicklungen finden sich in den Unteransprüchen 2 bis 8 und 10 bis 20.

Dadurch, dass in ein und derselben Maschine, nämlich der Spritzgießmaschine, zunächst die Kunststoffteile spritzgegossen werden und direkt anschließend in einem Prägeschritt die Strukturen von dem Folienmaterial auf die Kunststoffteile übertragen werden, besitzen die Kunststoffteile vor dem Prägen bereits die erforderliche Temperatur, indem die Kühlzeit der Spritzlinge entsprechend eingestellt wird. Außerdem werden die Fehlerquellen, wie sie beim manuellen Einlegen von vorfabrizierten Kunststoffteilen in Prägepressen vorliegen, vermieden. Da insgesamt möglichst wenig Arbeitsstationen vorgesehen werden sollen, wird zur Reduzierung der Herstellungszeit für ein fertiges mit einer aufgeprägten Struktur ausgestattetes Kunststoffteil simultan zu dem Spritzprozess, also bei geschlossenem Werkzeug, der Prägeschritt (Unteranspruch 2) und gegebenenfalls weitere Arbeitsschritte wie das Ausstoßen der fertigen Teile und/oder das Einlegen von Kernen ausgeführt (Unteransprüche 4 und 5). Dies ist deshalb möglich, weil im Gegensatz zum Stand der Technik gemäß DE 195 04 332 A1 mit dem Schließvorgang der Spritzgießmaschine ausschließlich der Spritzvorgang eingeleitet und bei geschlossenem Werkzeug ausgeführt wird, während der Prägeschritt in einer von dem Schließvorgang losgelösten, separaten Bewegung ausgeführt wird, die aber in die Spritzgießmaschine räumlich integriert ist. Dadurch wird die Gesamtzykluszeit für die Herstellung eines fertigen Kunststoffteils mit aufgeprägter Struktur auf die Zeit für den reinen Spritzvorgang reduziert.

Eine erfindungsgemäße Spritzgießmaschine zur Ausübung des Verfahrens weist außer den bekannten Spritzstationen zwischen den Werkzeugaufspannplatten wenigstens eine Prägestation auf, die einen mit Prägewerkzeugen bestückbaren und zwischen den Werkzeugaufspannplatten bewegbaren Prägekolben und einen Vorrat an Prägefolie umfasst. Da im Gegensatz zur EP 0 671 251 A1 eine Aufsplittung des gesamten Herstellungsprozesses in eine Vielzahl von Teilschritten (Spritzen, Kühlen, Ausstoßen u.s.w. in getrennten Stationen) vermieden wird, kann der maschinentechnische Aufwand gering gehalten werden. Die Ausgestaltung gemäß dem Unteranspruch 14 hat den besonderen Vorteil, dass ein großer Prägekolbenhub eingestellt werden kann, so dass an der Prägestation genügend Freiraum vorgesehen werden kann, um weitere Arbeitsschritte wie das Einlegen von Kemen und/oder das Ausstoßen der fertigen mit der Struktur versehenen Kunststoffteile simultan zu dem bzw. den Spritzschritten bei geschlossenem Werkzeug ohne Schwierigkeiten ausführen zu können. In diesem Fall muss das Spritzgießwerkzeug nur soweit geöffnet werden, wie es für das Weitertakten der spritzgegossenen Kunststoffteile erforderlich ist. Durch die Verwendung eines geeignet ausgebildeten Hilfsetements gemäß den Unteransprüchen 15 und 16 wird trotz der exzentrischen Lage der Spritzpositionen einerseits und der mit einem großen Freiraum ausgestatteten Prägestationen andererseits eine überwiegend gleichmäßige Belastung sämtlicher Komponenten der Spritzgießmaschine gewährleistet. Beim exzentrischen Spritzgießen auftretende Kippmomente werden dadurch kompensiert. Die Ausführungsform gemäß dem Unteranspruch 18 besitzt den besonderen Vorteil, dass vorhandene Werkzeuge sowohl zum Spritzgießen als auch für den Prägevorgang verwendet werden können.

Nachfolgend soll die Erfindung anhand eines Ausführungsbeispiels und unter Bezugnahme auf die Figuren 1 bis 3 näher erläutert werden. Es zeigen:
- Fig.1: Längsschnitt durch eine Schließeinheit zwischen der festen und der beweglichen Werkzeugaufspannplatte;
- Fig.2: Schnitt entlang der Linie C-C von Fig.1:
- Fig.3: Schnitt entlang der Linie A-A von Fig.2.

In einer Schließeinheit einer Spritzgießmaschine (Horizontal- oder Vertiakalspritzgießmaschine) sind eine feste (1) und eine bewegliche (2) Werkzeugaufspannplatte vorgesehen, wobei auf letzterer ein Drehtisch 3 befestigt ist, beispielsweise mittels Spannpratzen. Auf dem Drehtisch ist eine Grundplatte 4 vorgesehen und darauf ist die bewegliche Hälfte 5, bestehend aus zwei identischen Werkzeugen 5a und 5b, eines Spritzgießwerkzeugs 5,6 angebracht. Die Werkzeughälfte 5 kann aber auch einstückig ausgebildet sein. Im geschlossenen Zustand der beiden Hälften 5 und 6 des Spritzgießwerkzeugs werden Kavitäten 7 gebildet, in die im Takt-1 plastifizierter Kunststoff 8 über eine Angußbuchse 9 mit Umlenkung und einen Heißkanal 10 eingespritzt und zu Kunststoffteilen 11 geformt wird. Heißkanal 10 und Angußbuchse 9 sind in ein Hilfselement 12 integriert, das an der festen Werkzeugaufspannplatte 1 unter Zwischenlage einer Zwischenplatte 13 befestigt ist. Im Bereich der Prägestation ist ein Prägekolben 14 in dem Hilfselement 12 bzw. einer in diesem liegenden Führungsbuchse 15 hydraulisch und/oder pneumatisch verschiebbar. Der Übersicht halber sind die hydraulischen und/oder pneumatischen Komponenten für die Bewegung des Prägekolbens 14 nicht dargestellt. Die feste Werkzeugaufspannplatte 1 verfügt im Bereich des Prägekolbens 14 über eine geeignet große Ausnehmung zur Durchführung des Prägekolbens, so dass ein geeignet großer Prägehub eingestellt werden kann, um einen ausreichenden Freiraum 16 zu bilden, damit parallel zum Einspritzvorgang neben dem Prägeschritt weitere Schritte wie beispielsweise das Ausstoßen oder Entnehmen der fertigen Teile und gegebenenfalls das Einlegen von zu umspritzenden Kernen ausgeführt werden können. An dem Kopf 17 des Prägekolbens 14 sind thermisch isoliert (18) ein beheizbarer Prägestempel 19 und ferner eine Abrollvorrichtung 20 für die Prägefolie 21 befestigt.

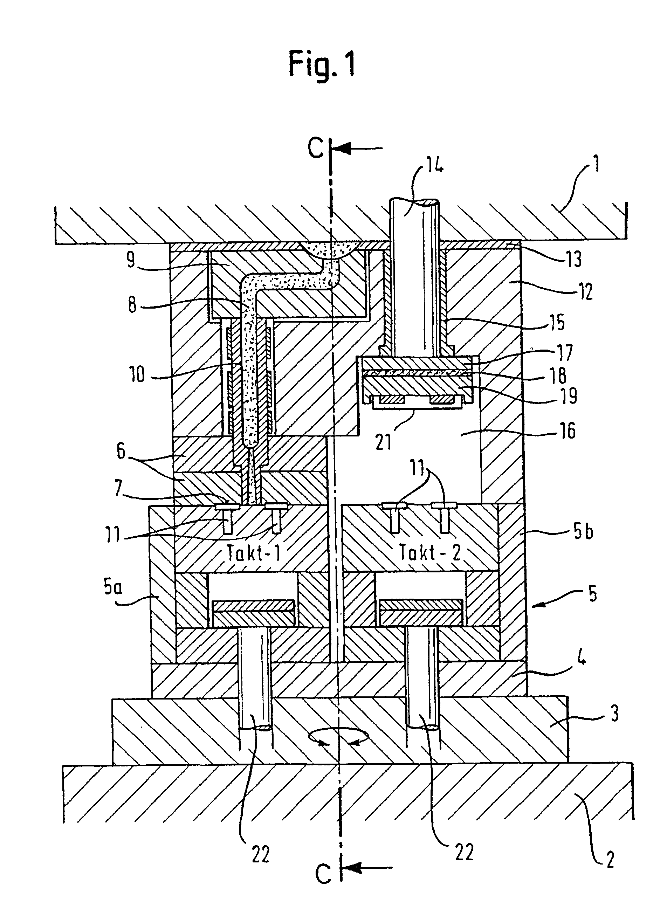

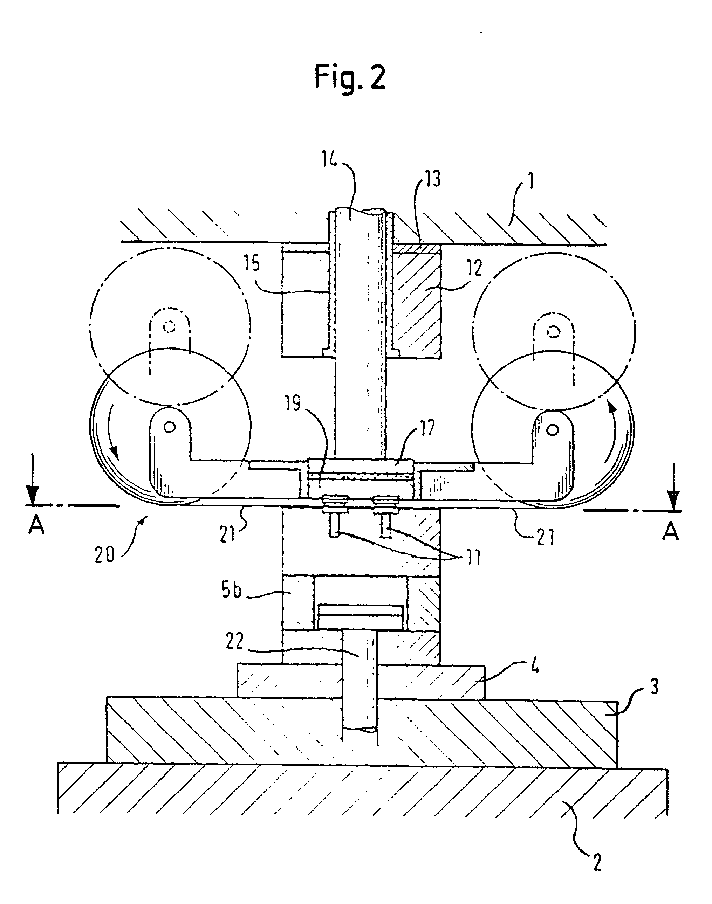

Fig.1 zeigt den Zustand mit geschlossenem Spritzgießwerkzeug 5,6 und zurückgefahrenen Prägekolben 14. In der Darstellung gemäß Fig.2 befindet sich der Prägekolben 14 im ausgefahrenen Zustand und drückt die von der Abrollvorrichtung 20 zugeführte Prägefolie auf die im Takt-1 spritzgegossenen Kunststoffteile, um in bekannter Weise die Prägefolie gemäß der Struktur des Prägestempels auf das Kunststoffteil zu übertragen. Die gestrichelt dargestellte Position der Abrollvorrichtung 20 entspricht der Darstellung von Fig.1, also dem zurückgefahrenen Zustand des Prägekolbens 14. Hinter den Kavitäten 7 bzw. den Kunststoffteilen 11 sind Auswerfer 22 vorgesehen, mit denen die Kunststoffteile nach Abschluss des Prägevorgangs, also nach Übertragung der Struktur auf das Kunststoffteil, aus dem Werkzeug entfernt werden können.

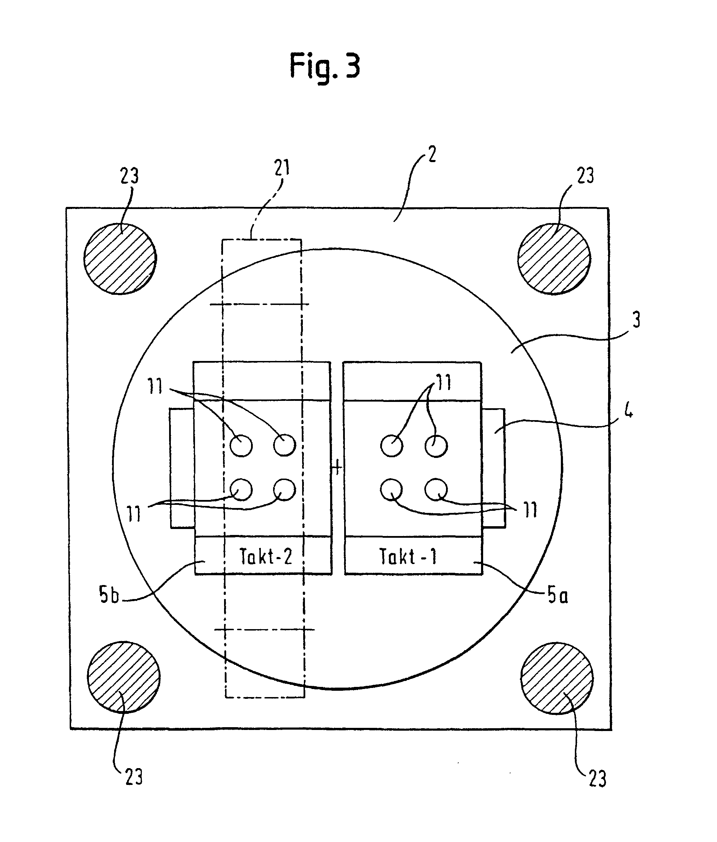

Fig.3 zeigt die an Holmen 23 geführte bewegliche Werkzeugaufspannplatte 2 mit dem Drehtisch 3, den Werkzeugen 5a und 5b sowie Kunststoffteilen 11 in den Kavitäten der Werkzeuge. Mit einer gestrichelten Linie ist die Bahn der Prägefolie 21 angedeutet.

Die Arbeitsweise der dargestellten Spritzgießmaschine ist dergestalt, dass im Takt-1 das Kunststoffteil gespritzt wird und gleichzeitig im Takt-2 der Prägeschritt ausgeführt wird. Ein Maschinenzyklus läuft im einzelnen wie folgt ab:
Takt-1:
   Sobald die Schließeinheit zugefahren ist und das Spritzgießwerkzeug geschlossen ist, wird plastifizierter Kunststoff in die gegebenenfalls mit Kernen bestückten Kavitäten eingespritzt; gegen Ende des Einspritzens erfolgt das Umschalten auf Nachdruck und anschließend beginnt die Kühlzeit.
Takt-2:
   Zeitlich parallel zu Takt-1 wird im Takt-2 auf die im vorangegangenen Takt-1 hergestellten Kunststoffe die gewünschte Struktur aufgeprägt. Hierzu wird ein Prägevorgang ausgeführt, bei dem der Prägekolben mit einer bestimmten Geschwindigkeit von der Ruheposition in die Prägeposition bewegt wird und dort die von der Abrollvorrichtung zugeführte und vorgespannte Prägefolie gegen die Kunststoffteile drückt. Die Fahrbewegung und der Druck des Pragekolbens werden durch ein Proportionalventil geregelt. Sowohl die Kraft als auch die Geschwindigkeit des Prägekolbens sind als Profil einstellbar. Die Steuerung der Regelparameter und die Eingabe der Sollwerte erfolgt über die Maschinensteuerung. Nach der für die Übertragung der Struktur erforderlichen Verweilzeit fährt der Prägekolben in die Ruheposition zurück und die Prägefolie wird weitergetaktet. Anschließend können die fertigen mit der Struktur versehenen Kunststoffteile ausgestoßen oder von einem Roboter entnommen werden. Die nunmehr leeren Kavitäten im Takt-2 - Werkzeug werden gegebenenfalls mit neuen zu um spritzenden Kernen bestückt.
   Nach dem Ende der Kühlzeit wird das Wertzeug geöffnet und die bewegliche Hälfte um 180° gedreht, so dass einerseits die im Takt-1 gerade geformten Kunststoffteile von der Spritzstation in die Prägestation und
   andererseits die nunmehr leeren oder mit Kernen bestückten Kavitäten aus Takt-2 von der Prägestation in die Spritzstation bewegt werden. Der nächste Maschinenzyklus kann dann starten.

Es können auch mehr als zwei Takte gefahren werden beispielsweise wenn ein Mehrkomponenten-Spritzgießen vor dem Prägeschritt erforderlich ist Dann ist der Drehtisch vom Fachmann in eine entsprechende Anzahl von Stationen aufzuteilen. Bedarfsweise konnen in einer Pragestation auch mehrere Prägekolben mit Prägefolien vorgesehen werden, wenn die Anzahl und Anordnung der Kunststoffteile dies erfordem sollten.

### Bezugszeichenliste

- 1: feste Werkzeugaufspannplatte
- 2: bewegliche Werkzeugaufspannplatte
- 3: Drehtisch
- 4: Grundplatte
- 5: bewegliche Werkzeughälfte mit Teilen 5a und 5b
- 6: feste Werkzeughälfte
- 7: Kavitäten
- 8: plastifizierter Kunststoff
- 9: Angußbuchse
- 10: Heißkanal
- 11: Kunststoffteil
- 12: Hilfeelement
- 13: Zwischenplatte
- 14: Prägekolben
- 15: Führungsbuchse
- 16: Freiraum
- 17: Kopf des Prägekolbens
- 18: Isolierplatte
- 19: beheizbarer Prägestempel
- 20: Abrollvorrichtung
- 21: Prägefolie
- 22: Auswerfer
- 23: Holme

## Patentansprüche

1. Verfahren zum Herstellen von Kunststoffteilen mit einer aufgeprägten Struktur, wobei mit einer Spritzgießmaschine in einem oder mehreren Spritzschritten in einem auf den Werkzeugaufspannplatten der Schließeinheit der Spritzgießmaschine aufgespannten Spritzgießwerkzeug Kunststoffteile hergestellt werden,
**dadurch gekennzeichnet,**
**dass** die Strukturen in der Schließeinheit der Spritzgießmaschine in einem Prägeschritt von einem Folienmaterial (21) auf die zuvor spritzgegossenen Kunststoffteile (11) übertragen werden, wobei der Prägeschritt von dem Spritzschritt entkoppelt ist und separat zum Schließvorgang der Schließeinheit der Spritzgießmaschine ausgeführt wird.

2. Verfahren nach Anspruch 1,
**dadurch gekennzeichnet,**
**dass** der Prägeschritt simultan zu dem bzw. den Spritzschritten ausgeführt wird.

3. Verfahren nach Anspruch 1 oder 2,
**dadurch gekennzeichnet,**
**dass** der bzw. die Spritzschritte und der Prägeschritt auf einem zwischen der festen (1) und der beweglichen (2) Werkzeugaufspannplatte der Spritzgießmaschine angeordneten Drehtisch (3) ausgeführt werden.

4. Verfahren nach einem der Ansprüche 1 bis 3,
**dadurch gekennzeichnet,**
**dass** der Prägeschritt und das Ausstoßen oder Entnehmen der mit der Struktur versehenen Kunststoffteile (11) in einer Station und simultan zu dem bzw. den Spritzschritten ausgeführt werden.

5. Verfahren nach einem der Ansprüche 1 bis 4,
**dadurch gekennzeichnet,**
**dass** das Einlegen von Kernen in die Werkzeuge der Spritzgießmaschine simultan zu dem bzw. den Spritzschritten in derselben Station wie der Prägeschritt ausgeführt wird.

6. Verfahren nach einem der Ansprüche 1 bis 5,
**dadurch gekennzeichnet,**
**dass** die Strukturen mittels Heißprägen übertragen werden.

7. Verfahren nach einem der Ansprüche 1 bis 6,
**dadurch gekennzeichnet,**
**dass** es sich bei der Struktur um eine elektrische Leiterbahnstruktur handelt.

8. Verfahren nach einem der Ansprüche 1 bis 6,
**dadurch gekennzeichnet,**
**dass** es sich bei der Struktur um eine Designstruktur handelt.

9. Spritzgießmaschine zum Herstellen von Kunststoffteilen mit einer aufgeprägten Struktur, mit mindestens einer Spritzeinheit, mit einer Schließeinheit, umfassend eine feste (1) und eine bewegliche (2) Werkzeugaufspannplatte, ein auf diesen Werkzeugaufspannplatten (1,2) aufgespanntes Spritzgießwerkzeug (5,6), dessen feste Hälfte (6) auf der festen Werkzeugaufspannplatte (1) und dessen bewegliche Hälfte (5) auf der beweglichen Werkzeugaufspannplatte (2) aufgespannt sind, und mit Mitteln zum Anfahren ein oder mehrerer Spritzstationen,
**dadurch gekennzeichnet,**
**dass** zwischen den mit dem Spritzgießwerkzeug (5,6) bestückten Werkzeugaufspannplatten (1,2) wenigstens eine Prägestation vorgesehen ist, die einen mit Prägewerkzeugen (19) bestückbaren und zwischen den Werkzeugaufspannplatten (1,2) bewegbaren Prägekolben (14) und einen Vorrat an Prägefolie (21) umfasst.

10. Spritzgießmaschine nach Anspruch 9,
**dadurch gekennzeichnet,**
**dass** zum Ansteuern der Spritzstationen und der Prägestationen ein Drehtisch (3) vorgesehen ist.

11. Spritzgießmaschine nach Anspruch 10,
**dadurch gekennzeichnet,**
**dass** der Drehtisch (3) an der festen Werkzeugaufspannplatte (1) befestigt ist, dass der Drehtisch (3) über eine der Anzahl an Spritz- und Prägeschritten entsprechende Anzahl an Ausnehmungen verfügt, dass in der festen Werkzeugaufspannplatte (1) im Bereich der Spritzpositionen Ausnehmungen vorgesehen sind und dass der Prägekolben (14) der beweglichen Werkzeugaufspannplatte (2) zugeordnet ist.

12. Spritzgießmaschine nach Anspruch 10,
**dadurch gehennzeichnet,**
dass der Drehtisch (3) an der beweglichen Werkzeugaufspannplatte (2) befestigt ist und dass der Prägekolben (14) der festen Werkzeugaufspannplatte (1) zugeordnet ist.

13. Spritzgießmaschine nach Anspruch 9 oder 10,
**dadurch gekennzeichnet,**
**dass** eine oder mehrere Einspritzeinheiten von der Seite in den Raum zwischen den Werkzeugaufspannplatten (1,2) bewegbar sind und dass der Prägekolben (14) der festen (1) oder der beweglichen (2) Werkzeughälfte zugeordnet ist.

14. Spritzgießmaschine nach einem der Anspruch 9 bis 13,
**dadurch gekennzeichnet,**
**dass** in der Werkzeugaufspannplatte (1,2), der der Prägekolben (14) zugeordnet ist, eine Ausnehmung zur Durchführung des Prägekolbens (14) vorgesehen ist.

15. Spritzgießmaschine nach einem der Ansprüche 9 bis 14,
**dadurch gekennzeichnet,**
**dass** an der festen (1) oder der beweglichen (2) Werkzeugaufspannplatte ein Hilfselement (12) vorgesehen ist, das die feste (6) oder die bewegliche (5) Hälfte des Spritzgießwerkzeugs trägt und in dem der Prägekolben (14) verschiebbar ist, vorzugsweise in einer in dem Hilfselement (12) vorgesehenen Führungsbuchse (15).

16. Spritzgießmaschine nach Anspruch 15,
**dadurch gekennzeichnet,**
**dass** in Schtießrichtung die Länge des Hilfselements (12) im Bereich des Prägekolbens (14), insbesondere der Außenumfang des Hilfselements (12) in diesem Bereich, gleich ist der Summe aus der Erstreckung der festen (6) oder der beweglichen (5) Hälfte des Spritzgießwerkzeugs in Schließrichtung und der Länge des Hilfselements (12) in diesem Bereich.

17. Spritzgießmaschine nach einem der Ansprüche 9 bis 16,
**dadurch gekennzeichnet,**
**dass** in der festen Werkzeugaufspannplatte (1) eine zentrale Einspritzposition und eine Angussbuchse (9) mit Umlenkkanal vorgesehen sind.

18. Spritzgießmaschine nach einem der Ansprüche 9 bis 17,
**dadurch gekennzeichnet,**
**dass** eine Spritzstation und eine Prägestation vorgesehen sind und dass die bewegliche Werkzeughälfte (5) aus zwei identischen Werkzeugen (5a, 5b) besteht.

19. Spritzgießmaschine nach einem der Ansprüche 9 bis 18,
**dadurch gekennzeichnet,**
**dass** an dem Prägekolben (14) eine Prägefolienabrollvorrichtung (20) angebracht ist.

20. Spritzgießmaschine nach einem der Ansprüche 9 bis 19,
**dadurch gekennzeichnet,**
**dass** die Prägefolienabmllvorrichtung (20) an einer festen Position angebracht ist.

## Claims

1. Method for producing plastics parts with an impressed structure, wherein plastics parts are produced by means of an injection-moulding machine in one or more injection steps in an injection mould which is mounted on the mould mounting plates of the closing unit of the injection-moulding machine **characterised in that** the structures are transferred from a foil material (21) to the previously injection-moulded plastics parts (11) in an embossing steep in the closing unit of the injection-moulding machine, wherein the embossing step is isolated from the injection step and carried out separately from the closing operation of the closing unit of the injection-moulding machine.

2. Method according to claim 1, **characterised in that** the embossing step is carried out simultaneously with the injection step or steps.

3. Method according to claim 1 or 2, **characterised in that** the injection step or steps and the embossing step are carried out on a turntable (3) which is disposed between the fixed (1) and the movable (2) mould mounting plate of the injection-moulding machine.

4. Method according to any one of claims 1 to 3, **characterised in that** the embossing step and the ejection or removal of the plastics parts (11) provided with the structure are carried out in one station and simultaneously with the injection step or steps.

5. Method according to any one of claims 1 to 4, **characterised in that** cores are inserted in the moulds of the injection-moulding machine simultaneously with the injection step or steps in the same station as the embossing step.

6. Method according to any one of claims 1 to 5, **characterised in that** the structures are transferred by means of hot stamping.

7. Method according to any one of claims 1 to 6, **characterised in that** the structure is an electrical conductor track structure.

8. Method according to any one of claims 1 to 6, **characterised in that** the structure is a design structure.

9. Injection-moulding machine for producing plastics parts with an impressed structure, with at least one injection unit, with a closing unit comprising a fixed (1) and a movable (2) mould mounting plate, an injection mould (5, 6) which is mounted on these mould mounting plates (1, 2) and the fixed part (6) of which is mounted on the fixed mould mounting plate (1) and the movable part (5) of which is mounted on the movable mould mounting plate (2), and with means for starting up one or more injection stations, **characterised in that** at least one embossing station is provided between the mould mounting plates (1, 2) fitted with the injection mould (5, 6), which station comprises an embossing plunger (14), which can be fitted with embossing dies (19) and moved between the mould mounting plates (1, 2), and a store of embossing foil (21).

10. Injection-moulding machine according to claim 9, **characterised in that** a turntable (3) is provided to drive the injection stations and the embossing stations.

11. Injection-moulding machine according to claim 10, **characterised in that** the turntable (3) is fastened to the fixed mould mounting plate (1), that the turntable (3) has a number of recesses corresponding to the number of injection and embossing steps, that recesses are provided in the fixed mould mounting plate (1) in the region of the injection positions, and that the embossing plunger (14) is associated with the movable mould mounting plate (2).

12. Injection-moulding machine according to claim 10, **characterised in that** the turntable (3) is fastened to the movable mould mounting plate (2), and that the embossing plunger (14) is associated with the fixed mould mounting plate (1).

13. Injection-moulding machine according to claim 9 or 10, **characterised in that** one or more injection unit (8) can be moved from the side into the space between the mould mounting plates (1,2), and that the embossing plunger (14) is associated with the fixed (1) or the movable (2) mould part.

14. Injection-moulding machine according to any one of claims 9 to 13, **characterised in that** a recess for the passage of the embossing plunger (14) is provided in the mould mounting plate (1, 2) which is associated with the embossing plunger (14).

15. Injection-moulding machine according to any one of claims 9 to 14, **characterised in that** an auxiliary element (12) is provided on the fixed (1) or the mobile (2) mould mounting plate, which element bears the fixed (6) or the mobile (5) part of the injection mould and can be displaced in the embossing plunger (14), preferably in a guide bushing (15) provided in the auxiliary element (12).

16. Injection-moulding machine according to claim 15, **characterised in that** the length of the auxiliary element (12) in the closing direction in the region of the embossing plunger 14, in particular the outer circumference of the auxiliary element (12) in this region, is equal to the sum of the extent of the fixed (6) or the movable (5) part of the injection mould in the closing direction and the length of the auxiliary element (12) in this region.

17. Injection-moulding machine according to any one of claims 9 to 16, **characterised in that** a central injection position and a sprue bushing (9) with deflection duct are provided in the fixed mould mounting plate (1).

18. Injection-moulding machine according to any one of claims 9 to 17, **characterised in that** an injection station and an embossing station are provided, and that the movable mould part (5) consists of two identical moulds (5a, 5b).

19. Injection-moulding machine according to any one of claims 9 to 18, **characterised in that** an embossing foil unwinding device (20) is fitted on the embossing plunger (14).

20. Injection-moulding machine according to any one of claims 9 to 19, **characterised in that** the embossing foil unwinding device (20) is fitted at a fixed position.

## Revendications

1. Procédé de fabrication de pièces en matière plastique disposant d'une structure gravée, dans lequel les pièces en matière plastique sont fabriquées à l'aide d'une presse à injection, en une ou plusieurs étapes 5 d'injection dans un moule à injection fixé sur les plateaux de fixation du moule du dispositif de fermeture du moule de la presse à injection,
**caractérisé en ce que**
les structures du dispositif de fermeture du moule 10 de la presse à injection sont transférées lors d'une étape d'estampage d'un film (21) sur la pièce en matière plastique (11) au préalable moulée par injection, et dans lequel l'étape d'estampage est découplée de l'étape d'injection et est réalisée séparément du procédé de 15 fermeture du dispositif de fermeture du moule de la presse à injection.

2. Procédé selon la revendication 1,
**caractérisé en ce que**
20 l'étape d'estampage est réalisée en même temps que la ou les étapes d'injection.

3. Procédé selon la revendication 1 ou 2,
**caractérisé en ce que**
25 la ou les étapes d'injection et l'étape d'estampage sont réalisées sur une table tournante(3), fixée entre les plateaux de fixation fixe (1) et mobile (2) de la presse à injection.

4. Procédé selon l'une quelconque des revendications 1 à 3,
**caractérisé en ce que**
l'étape d'estampage et l'éjection ou le prélèvement des pièces en matière plastique (11) munies de la structure sont réalisées dans une station et en même temps que la ou les étapes d'injection.

5. Procédé selon l'une quelconque des revendications 1 à 4,
**caractérisé en ce que**
le remmoulage dans les moules de la presse à injection est réalisé au même moment que la ou les étapes d'injection dans la même station que celle effectuant l'étape d'estampage.

6. Procédé selon l'une quelconque des revendications 1 à 5,
**caractérisé en ce que**
les structures sont transférées au moyen de l'estampage à chaud.

7. Procédé selon l'une quelconque des revendications 1 à 6,
**caractérisé en ce qu'**
il s'agit, pour la structure, d'une structure de piste conductrice électrique.

8. Procédé selon l'une quelconque des revendications 1 à 6,
**caractérisé en ce qu'**
il s'agit, pour la structure, d'une structure de conception.

9. Presse à injection pour la fabrication de pièces en matière plastique avec une structure gravée, disposant au moins d'une unité d'injection, d'un dispositif de fermeture du moule, comprenant un plateau de fixation du moule fixe (1) et un plateau mobile (2) ainsi qu'un moule à injection (5, 6) fixé sur ces plateaux de fixation du moule (1,2), dont la demi-forme fixe (6) est montée sur le plateau de fixation fixe du moule (1), et dont la demi-forme mobile (5) est montée sur le plateau de fixation mobile du moule (2), et avec des moyens de mise en marche d'une ou plusieurs stations d'injection,
**caractérisée en ce que**,
au moins une station d'estampage, comprenant des pistons d'estampage (14) qui peuvent être munis de moules d'estampage et être déplacés entre les plateaux de fixation du moule (1,2) et une réserve de film d'estampage, laquelle station d'estampage est prévue entre les plateaux de fixation du moule (1,2) munis du moule à injection (5,6).

10. Presse à injection selon la revendication 9,
**caractérisée en ce qu'**
une table tournante (3) est prévue pour diriger les stations d'injection et d'estampage.

11. Presse à injection selon la revendication 10,
**caractérisée en ce que**
la table tournante (3) est fixée au plateau de fixation fixe du moule (1), **en ce que** la table tournante (3) dispose d'un nombre de creux correspondant au nombre d'étapes d'injection et d'estampage, **en ce que** des creux sont prévus dans le plateau de fixation fixe du moule (1) dans la limite des positions de moulage, et **en ce que** le piston d'estampage (14) est adjoint au plateau de fixation mobile du moule (2).

12. Presse à injection selon la revendication 10,
**caractérisée en ce que**
la table tournante (3) est fixée au plateau de fixation mobile du moule (2) et **en ce que** le piston d'estampage (14) est adjoint au plateau de fixation fixe du moule (1).

13. Presse à injection selon la revendication 9 ou 10,
**caractérisée en ce que**
une ou plusieurs unités à injection peuvent être déplacées latéralement dans la zone entre les plateaux de fixation du moule (1,2), et **en ce que** le piston d'estampage (14) est adjoint à la demi-forme fixe (1) ou à la demi-forme mobile (2) du moule.

14. Presse à injection selon l'une quelconque des revendications 9 à 13,
**caractérisée en ce qu'**
un creux est prévu dans le plateau de fixation du moule (1,2), auquel le piston d'estampage (14) est adjoint, pour guider le piston d'estampage (14).

15. Presse à injection selon une des quelconques revendications 9 à 14,
**caractérisée en ce qu'**
un élément auxiliaire (12), qui supporte les demi-formes fixe (6) et mobile (5) du moule à injection et dans lequel le piston d'estampage (14) est déplaçable, de préférence dans une douille de guidage (15) prévue dans l'élément auxiliaire(12), est prévu au niveau des plateaux de fixation fixe (1) et mobile (2) du moule.

16. Presse à injection selon la revendication 15,
**caractérisée en ce que**,
dans le sens de la fermeture, la longueur de l'élément auxiliaire(12) au niveau du piston d'estampage (14), en particulier le diamètre externe de l'élément auxiliaire(12) à ce niveau, est égal à la somme de l'extension des demi-formes fixe (6) et mobile (5) du moule à injection dans le niveau de serrage, et de la longueur de l'élément auxiliaire(12) à ce niveau.

17. Presse à injection selon l'une quelconque des revendications 9 à 16,
**caractérisée en ce qu'**
une position d'injection centrale et une cheminée de moule(9) pourvue d'un canal de retour sont prévues dans le plateau de fixation fixe du moule(1).

18. Presse à injection selon l'une quelconque des revendications 9 à 17,
**caractérisée en ce qu'**
une station d'injection et une station d'estampage sont prévues, et **en ce que** la demi-forme mobile du moule (5) est composée de deux moules identiques (5a,5b).

19. Presse à injection selon l'une quelconque des revendications 9 à 18,
**caractérisée en ce qu'**
un dispositif de déroulement du film d'estampage (20) est installé au niveau du piston d'estampage (14).

20. Presse à injection selon l'une quelconque des revendications 9 à 19,
**caractérisée en ce que**
le dispositif de déroulement du film d'estampage (20) est installé au niveau d'une position fixe.
